# EUROPEAN PATENT SPECIFICATION

(11) **EP 0 442 634 B1**
(45) Date of publication and mention of the grant of the patent: **17.04.1996**
(21) Application number: 91300750.6
(22) Date of filing: 31.01.1991
(51) Int. Cl.: H04N 9/78

(54) **Video signal separation circuits**
Videosignaltrennungsschaltung
Circuits de séparation de signal vidéo

(30) Priority: 15.02.1990 JP 34501/90
(43) Date of publication of application: 21.08.1991
(73) Proprietor: SONY CORPORATION, Tokyo 141 (JP)
(72) Inventor: Toshitaka, Senuma, c/o Patents Division, Shinagawa-ku, Tokyo 141 (JP)
(74) Representative: Robinson, Nigel Alexander Julian

(56) References cited:
- EP-A- 0 321 045
- PATENT ABSTRACTS OF JAPAN, vol. 9, no. 189 (E-333)[1912], 6th August 1985; & JP-A-60 057 789 (NIPPON DENKI K.K.) 03-04-1985
- PATENT ABSTRACTS OF JAPAN, vol. 13, no. 383 (E-811)[3731], 24th August 1989; & JP-A-1 132 290 (HITACHI LTD) 24-05-1989
- PATENT ABSTRACTS OF JAPAN, vol. 6, no. 243 (E-145)[1121], 2nd December 1982; & JP-A-57 141 190 (PIONEER) 01-09-1982

## Description

This invention relates to video signal separation circuits. Embodiments of the invention are applicable, for example, to horizontal Y/C separation circuits in video equipment.

Since a Y (luminance) signal and a C (chrominance) signal are required to be separately processed in apparatus such as a video tape recorder, Y/C separation of a video signal is performed therein. In horizontal Y/C separation, for example, a band-pass filter with a predetermined pass-band is used for taking out frequencies around fsc (the sub-carrier frequency) where the chrominance signal is concentrated.

The frequency bandwidth of the C signal is expanded at an edge portion of the C signal in the horizontal direction. Therefore, if the pass-band of a band-pass filter is fixed, the portions of the C signal components which do not pass through the band-pass filter interfere with the Y signal, thereby causing the problem of dot crawl. If a colour bar signal is taken as an example, a pseudo signal in a dotted form remains at the edge portion in the horizontal direction where there is a change in colour.

Patent Abstracts of Japan, Vol. 9, No. 189 (E-333) [1912] describes a circuit for separating luminance and chrominance components in a composite video signal, comprising: a first band-pass filter for cutting-off the composite signal at frequencies below and above a predetermined frequency band; a second circuit for modifying the composite signal; a switch for selecting between an output of the first filter and an output of the second circuit to provide a chrominance component signal; and subtractor means for the chrominance component signal and the composite signal to provide a luminance component signal. In this arrangement, the second circuit is a two clock cycle delay circuit.

Patent Abstracts of Japan, Vol. 13, No. 383 (E-811) (3731) describes a luminance/chrominance separating circuit having a plurality of band-pass filters that are selected between in dependence upon detected motion and a comb filter that is switched into and out of use in dependence upon a detected edge in the composite signal.

One aspect of the present invention provides a circuit for separating luminance and chrominance components in a composite video signal, comprising:
a first band-pass filter for cutting-off the composite signal at frequencies below and above a predetermined frequency band;
a second band-pass filter for cutting-off the composite signal at frequencies below and above a second predetermined frequency band which is wider than and contains the first-mentioned frequency band; and
subtractor means for the chrominance component signal and the composite signal to provide a luminance component signal;
characterised by:
a switch for selecting between an output of the first filter and an output of the second filter to provide a chrominance component signal; and
an edge detector for detecting an edge of the composite signal and for controlling the switch so that the wider pass-band is selected when an edge is detected and the narrower pass-band is selected when an edge is not detected.

The second band-pass filter can pass a wider bandwidth of the chrominance component signal than the first band-pass filter so as to reduce interference with the luminance component signal.

Another aspect of the present invention provides a circuit for separating luminance and chrominance components of a composite video signal, comprising:
a band-pass filter for cutting-off the composite signal at frequencies below and above a frequency band having a changeable width to provide a chrominance component signal; and
subtractor means for the chrominance component signal and the composite signal to provide a luminance component signal;
characterised by:
a switch for changing the band-pass width of the filter; and an edge detector for detecting an edge of the composite signal and for controlling the switch so that the wider pass-band is selected when an edge is detected and the narrower pass-band is selected when an edge is not detected.

The invention will now be described by way of example with reference to the accompanying drawings, throughout which like parts are referred to by like references, and in which:
Figure 1 shows an embodiment of video signal separation circuit according to the present invention; and
Figures 2A, 2B, 3A and 3B are amplitude/frequency diagrams used to explain the operation of the embodiment.

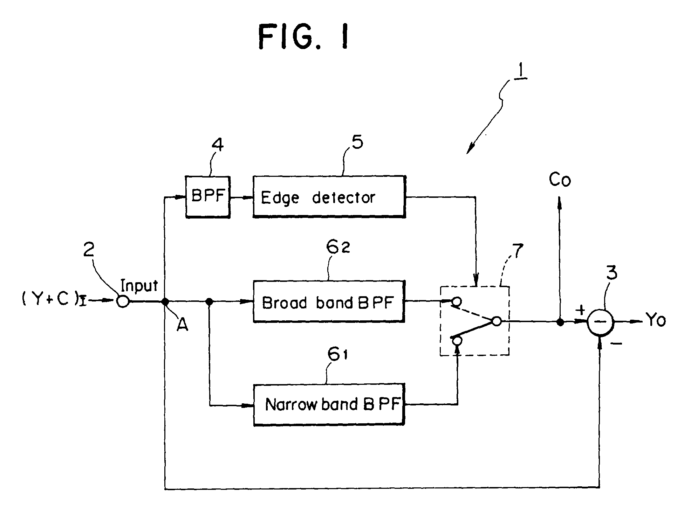

Referring to Figure 1, the embodiment to be described is a Y/C separation circuit 1 comprising an input terminal 2 to which a video signal (Y + C)_{I} including a Y signal and a C signal is supplied.

At a junction A, the input signal (Y + C)_{I} is divided into three portions, one of which is supplied to a subtractor 3. Another portion of the input signal (Y + C)_{I} is supplied to an edge detector circuit 5 through a band-pass filter 4. The edge detector circuit 5 detects the portion where a change in colour is present, by full-wave rectifying the output of the band-pass filter 4 and then comparing the rectified output with a reference level.

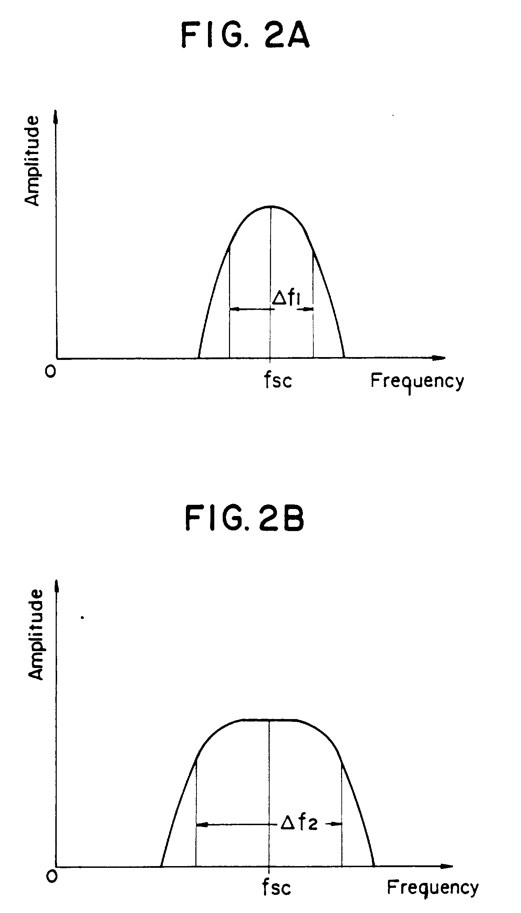

Band-pass filters 6₁ and 6₂ arranged in parallel to each other receive the input signal (Y + C)_{I} from the input terminal 2, and extract the C signal therefrom. More specifically, with the amplitude characteristic of the band-pass filter 6₁ schematically shown in Figure 2A, and the amplitude characteristic of the band-pass filter 6₂ schematically shown in Figure 2B, the centre frequency of both the band-pass filters is set to fsc, approximately. While having this characteristic in common, the pass-band (represented by "Δf2") of one band-pass filter 6₂ is set to be broader than the pass-band (represented by "Δf1") of the other pass-band filter 6₁.

In the stage subsequent to the band-pass filters 6₁ and 6₂, there is provided a switch element 7, which is controlled by the edge detector circuit 5 to change over, so that the output of the band-pass filter 6₂ (hereinafter referred to as the "broad-band BPF") having the broader pass-band is supplied to the subtractor 3 at an edge portion of the C signal, and the output of the band-pass filter 6₁ (hereinafter referred to as the "narrow-band BPF") having the narrower pass-band is supplied to the subtractor 3 at other portions of the C signal.

In the subtractor 3, the input signal (Y + C)_{I} is subtracted from a chrominance signal output (hereinafter represented by "Co") of the band-pass filter 6₁ or 6₂ selected by the switch element 7, and thus, a Y signal output (represented by "Yo") is obtained.

The operation of the Y/C separation circuit 1 will now be described.

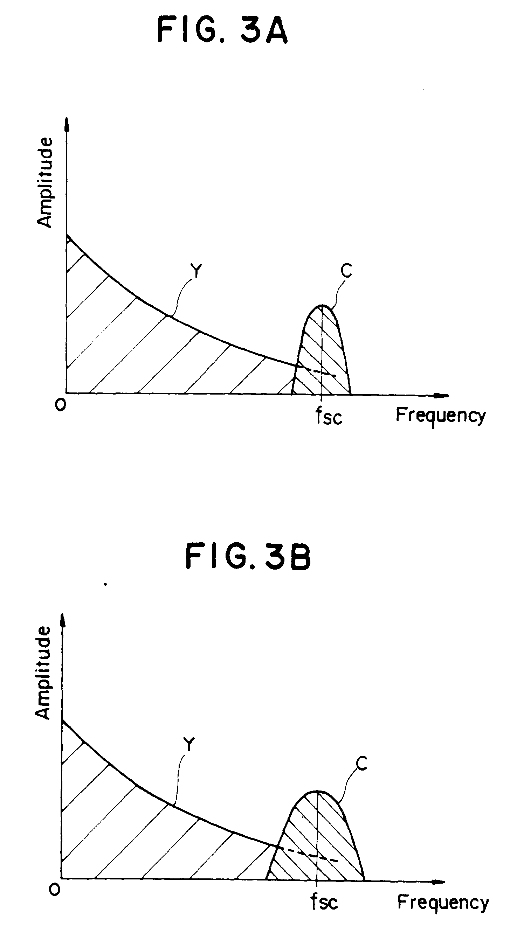

At portions other than edge portions in the C signal, the frequency characteristic of the input signal (Y + C)_{I} is as schematically shown in Figure 3A. At such portions, the range of the spectral distribution corresponding to the C signal is relatively narrow and, hence, there is present only a small portion where the C signal interferes with the high frequency components of the Y signal.

The chrominance components are extracted from the input signal by the band-pass filter 4, and it is determined whether or not the chrominance signal is at the portion where there is a change in colour by the edge detector circuit 5, but in the above case, the portion is determined to be other than the edge portion. Hence, the switch element 7 changes over such that the narrow-band BPF 6₁ is selected as indicated by a solid line in Figure 1.

Consequently, the output of the narrow-band BPF 6₁ is supplied to the subtractor 3, but it has little effect on the high frequency components of the Y signal because the pass-band Δf₁ is relatively narrow.

On the other hand, the bandwidth of the C signal is broader at an edge portion where there is a change in colour as shown in Figure 3B.

In such event, the portion is determined by the edge detector circuit 5 to be a portion where there is a change in colour, and the switch element 7 is caused by a signal then supplied thereto from the edge detector circuit 5 to change over such that the broad-band BPF 6₂ is selected as indicated by a broken line in Figure 1.

As a result, the C signal with an expanded bandwidth is taken out by the broad-band BPF 6₂ to be sent to the subtractor 3 and, hence, dot crawl is reduced.

Since the chrominance signal expanded in its bandwidth at an edge portion is passed through the second band-pass filter, dot crawl can be reduced, whereas, since the chrominance signal at portions where there is no change in colour is taken out through the first band-pass filter, the luminance signal bandwidth is not decreased.

Although, in the above embodiment there are provided two separate band-pass filters and either of the filters is switch-selected according as the chrominance signal is at an edge portion or at another portion, the invention is not limited to such an arrangement. For example, is possible as to use a single filter and make the circuit parameters of the filter variable (such as varying the Q value when the filter is an analogue filter, or varying the coefficients of a multiplier when the filter is a digital filter) so that the characteristics of the filter can be changed.

## Claims

1. A circuit for separating luminance and chrominance components in a composite video signal, comprising:
a first band-pass filter (6₁) for cutting-off the composite signal ((Y+C)_{I}) at frequencies below and above a predetermined frequency band (Figure 2A);
a second band-pass filter (6₂) for cutting-off the composite signal at frequencies below and above a second predetermined frequency band (Figure 2B) which is wider than and contains the first-mentioned frequency band; and
subtractor means (3) for the chrominance component signal and the composite signal to provide a luminance component signal (Yₒ);
characterised by:
a switch (7) for selecting between an output of the first filter and an output of the second filter to provide a chrominance component signal (Cₒ); and
an edge detector (5) for detecting an edge of the composite signal and for controlling the switch so that the wider pass-band is selected when an edge is detected and the narrower pass-band is selected when an edge is not detected.

2. A circuit for separating luminance and chrominance components of a composite video signal, comprising:
a band-pass filter for cutting-off the composite signal at frequencies below and above a frequency band having a changeable width to provide a chrominance component signal; and
subtractor means for the chrominance component signal and the composite signal to provide a luminance component signal;
characterised by:
a switch for changing the band-pass width of the filter; and
an edge detector (5) for detecting an edge of the composite signal and for controlling the switch so that the wider pass-band is selected when an edge is detected and the narrower pass-band is selected when an edge is not detected.

3. A circuit as claimed in claim 2, wherein said filter is a digital filter.

4. A circuit as claimed in any one of the preceding claims, further comprising a further band-pass filter (4) for filtering a chrominance signal from the composite signal and supplying that chrominance signal to the edge detector.

5. A circuit as claimed in any one of the preceding claims, wherein the centre frequencies of the wider pass-band and the narrower pass-band are both approximately equal to the sub-carrier frequency of the composite signal.

## Patentansprüche

1. Schaltung zur Trennung von Luminanz- und Chrominanzkomponenten in einem zusammengesetzten Videosignal, mit:
einem ersten Bandpaßfilter (6₁) zum Begrenzen des zusammengesetzten Signals ((Y+C)_{I}) bei Frequenzen unterhalb und oberhalb eines bestimmten Frequenzbandes (Fig. 2A);
einem zweiten Bandpaßfilter (6₂) zum Begrenzen des zusammengesetzten Signals bei Frequenzen unterhalb und oberhalb eines zweiten bestimmten Frequenzbandes (Fig. 2B), welches breiter ist als das zuerst erwähnte Frequenzband und dieses enthält; und
einer Subtrahiereinrichtung (3) für das Chrominanzkomponentensignal und das zusammengesetzte Signal, um ein Luminanzkomponentensignal (Yₒ) bereitzustellen;
gekennzeichnet durch
einen Schalter (7) zum Auswählen zwischen einem Ausgangssignal des ersten Filters und einem Ausgangssignal des zweiten Filters, um ein Chrominanzkomponentensignal (Cₒ) bereitzustellen; und
einen Flankendetektor (5) zur Ermittlung einer Flanke des zusammengesetzten Signals und zum Steuern des Schalters derart, daß das breitere Durchlaßband ausgewählt wird, wenn eine Flanke ermittelt wird, und das engere Durchlaßband ausgewählt wird, wenn keine Flanke ermittelt wird.

2. Schaltung zur Trennung von Luminanz- und Chrominanzkomponenten eines zusammengesetzten Videosignals, mit:
einem Bandpaßfilter zur Begrenzung des zusammengesetzten Signals bei Frequenzen unterhalb und oberhalb eines Frequenzbandes, welches eine änderbare Breite besitzt, um ein Chrominanzkomponentensignal bereitzustellen; und
einer Subtrahiereinrichtung für das Chrominanzkomponentensignal und das zusammengesetzte Signal, um ein Luminanzkomponentensignal bereitzustellen;
gekennzeichnet durch
einen Schalter zum Ändern der Bandpaßbreite des Filters; und
einen Flankendetektor (5) zur Ermittlung einer Flanke des zusammengesetzten Signals und zum Steuern des Schalters derart, daß das breitere Durchlaßband ausgewählt wird, wenn eine Flanke ermittelt wird, und das engere Durchlaßband ausgewählt wird, wenn keine Flanke ermittelt wird.

3. Schaltung nach Anspruch 2, wobei das Filter ein digitales Filter ist.

4. Schaltung nach einem der vorhergehenden Ansprüche, die außerdem ein weiteres Bandpaßfilter (4) zum Filtern eines Chrominanzsignals aus dem zusammengesetzten Signal und zum Liefern dieses Chrominanzsignals zum Flankendetektor aufweist.

5. Schaltung nach einem der vorhergehenden Ansprüche, wobei die Mittenfrequenzen des breiteren Durchlaßbands und des engeren Durchlaßbands ungefähr gleich der Hilfsträgerfrequenz des zusammengesetzten Signal sind.

## Revendications

1. Circuit pour séparer les composantes de luminance et de chrominance dans un signal vidéo composite, comprenant:
- un premier filtre passe-bande (6₁) pour éliminer le signal composite ((Y+C)_{I}) aux fréquences inférieures et supérieures à une bande de fréquences prédéterminées (figure 2A);
- un deuxième filtre passe-bande (6₂) pour éliminer le signal composite aux fréquences inférieures et supérieures à une deuxième bande de fréquences prédéterminée (figure 2B) qui est plus large que la bande de fréquences mentionnée en premier et qui comprend celle-ci; et
- des moyens soustracteurs (3) pour le signal de chrominance et le signal composite pour fournir un signal de composante de luminance (Yₒ),
caractérisé par:
- un commutateur (7) pour sélectionner entre le signal de sortie du premier filtre et le signal de sortie du deuxième filtre pour fournir un signal de composante de chrominance (Cₒ); et
- un détecteur de bord (5) pour détecter un bord du signal composite et pour commander le commutateur de telle manière que la bande passante plus large soit sélectionnée lorsqu'un bord est détecté et la bande passante plus étroite soit sélectionnée lorsqu'un bord n'est pas détecté.

2. Circuit pour séparer les composantes de luminance et de chrominance d'un signal vidéo composite, comprenant:
- un filtre passe-bande pour éliminer le signal composite aux fréquences inférieures et supérieures à une bande de fréquences ayant une largeur changeable pour fournir un signal de composante de chrominance; et
- des moyens soustracteurs pour le signal de composante de chrominance et le signal composite pour fournir un signal de composante de luminance,
caractérisé par:
- un commutateur pour changer la largeur de la bande passante du filtre; et
- un détecteur de bord (5) pour détecter un bord du signal composite et pour commander le commutateur de telle manière que la bande passante plus large soit sélectionnée lorsqu'un bord est détecté, et la bande passante plus étroite soit sélectionnée lorsqu'un bord n'est pas détecté.

3. Circuit selon la revendication 2, dans lequel ledit filtre est un filtre numérique.

4. Circuit selon l'une quelconque des revendications précédentes, comprenant en outre un autre filtre passe-bande (4) pour filtrer un signal de chrominance issu du signal composite et fournir ce signal de chrominance au détecteur de bord.

5. Circuit selon l'une quelconque des revendications précédentes, dans lequel les fréquences centrales de la bande passante plus large et de la bande passante plus étroite sont approximativement égales à la fréquence de sous-porteuse du signal composite.
